# EUROPÄISCHE PATENTSCHRIFT

(11) **EP 2 569 136 B1**
(45) Veröffentlichungstag und Bekanntmachung des Hinweises auf die Patenterteilung: **16.07.2014**
(21) Anmeldenummer: 11719521.4
(22) Anmeldetag: 09.05.2011
(51) Int. Cl.: B29C 45/50, B29C 45/76, F15B 21/14, F15B 15/08, F15B 15/20

(54) **VERFAHREN ZUM BETRIEB EINES HYBRIDANTRIEBS UND HYBRIDANTRIEB**
METHOD FOR OPERATING A HYBRID DRIVE AND HYBRID DRIVE
PROCÉDÉ PERMETTANT DE FAIRE FONCTIONNER UN ENTRAÎNEMENT HYBRIDE ET ENTRAÎNEMENT HYBRIDE

(30) Priorität: 14.05.2010 DE 102010020573
(43) Veröffentlichungstag der Anmeldung: 20.03.2013
(73) Patentinhaber: Netstal-Maschinen AG, 8752 Näfels (CH)
(72) Erfinder: NOTZ, Markus, CH-8762 Schwändi (CH); LANKER, Markus, CH-8055 Zürich (CH)
(74) Vertreter: Wilhelm, Ludwig
(86) Internationale Anmeldenummer: PCT/EP2011/057420
(87) Internationale Veröffentlichungsnummer: WO 2011/141423

(56) Entgegenhaltungen:
- EP-A1- 0 760 277
- WO-A1-02/064345
- US-A1- 2005 258 795

## Beschreibung

Die vorliegende Erfindung betrifft ein Verfahren zum Betrieb eines Hybridantriebs sowie einen solchen Hybridantrieb.

Hybridantriebe zum Antrieb beweglicher Einheiten bei Werkzeugmaschinen, insbesondere auch bei Spritzgießmaschinen, sind allgemein bekannt. So ist es beim Antrieb der Plastifizier- und Einspritzeinheit einer Spritzgießmaschine bekannt, einen Antrieb, beispielsweise für den axialen Vorschub, vorzusehen, der sowohl aus einem elektrischen wie auch einem hydraulischen Teilantrieb besteht. Diesbezüglich wird auf die DE 43 44 335 C2 verwiesen, bei der in einer Ausführungsform die Antriebskraft einer Kombination von Elektromotoren hydraulisch unterstützt wird.

Eine analoge Vorrichtung einer Kombination von hydraulischem und elektrischem Antrieb für den Axialvorschub ist aus der JP 04189525 bekannt.

Überdies wird hinsichtlich eines Regelungsverfahrens für die hydraulische Unterstützung eines elektrischen Antriebs auf die EP 760 277 hingewiesen, bei dem eine Druckbeaufschlagung eines hydraulischen Kolbens über einen Druckmittelspeicher bei Erreichen einer definierten Regelgröße erfolgt, die einem festgelegten Belastungszustand des Elektromotors entspricht. Dabei ist der Druckanstieg im Zylinder proportional zur Lastaufnahme des Elektromotors.

Aus der DE 101 04 109 A1 ist ein weiteres Regelverfahren für die hydraulische Unterstützung eines elektrischen Antriebes für ein axial verfahrbares Maschinenteil in einer Spritzgießmaschine bekannt. Auf das axial verfahrbare Maschinenteil wirken in Längsrichtung die Kraft eines Elektromotors, dessen Drehbewegung über ein Getriebe in eine Längsbewegung umgesetzt wird, und die Kraft des Kolbens eines hydraulischen Zylinders. Die von dem Elektromotor ausgeübte Kraft wird auf einen Wert begrenzt, bei dem noch keine Beschädigung des Getriebes erfolgt. Zur Begrenzung des von dem Elektromotor aufgebrachten Kraftanteils wird aus dem Sollwert für die in axialer Richtung auf das Maschinenteil wirkende Kraft und dem Istwert dieser Kraft eine Regeldifferenz gebildet, die die Summe der auf das Maschinenteil in axialer Richtung wirkenden Kraftanteile steuert. Aus dem Istwert der in axialer Richtung auf das Maschinenteil wirkenden Kraft und einem die mechanische Belastbarkeit des Getriebes berücksichtigenden Wert wird ein Sollwert für die in axialer Richtung auf den Kolben wirkende Kraft gebildet. Aus dem Sollwert für die in axialer Richtung auf den Kolben wirkende Kraft und ihrem Istwert wird eine Regeldifferenz gebildet, die einen der auf das Maschinenteil in axialer Richtung wirkenden Kraftanteile steuert.

Nachteilig ist dabei, dass die hydraulischen Zylinder in der Regel mittels Proportionalventilen gesteuert werden, welche die Vorwärts- und Rückwärtsbewegung entsprechend ihrer Ansteuerung bestimmen. Mit einer solchen Regelung wird sichergestellt, dass bei einer bestimmten Anwendung mit einer vorgegebenen Geschwindigkeit verfahren werden kann. Die Geschwindigkeit, mit der sich der Hydraulikzylinder bewegt, ist dabei proportional zum Volumenstrom. Ein unterschiedlich großer Volumenstrom kann dadurch erzeugt werden, dass das Ventil mehr oder weniger stark ausgelenkt wird. Andererseits bedeutet eine weniger schnelle Verfahrung des Zylinders aber auch eine höhere Drosselung beim Ventildurchfluss mit dem Nachteil, dass überschüssige Energie, die an sich zur Verfügung steht, in Wärme umgewandelt wird und verloren geht.

Das Dokument WO-A-02 064 345 offenbart ein Verfahren gemäß dem Oberbegriff des Anspruchs 1.

Aufgabe der vorliegenden Erfindung ist es, mit einem Hybridantrieb einen Antrieb zu realisieren, der möglichst energieeffizient ist.

Diese Aufgabe wird verfahrensmäßig durch die im Anspruch 1 und vorrichtungsmäßig durch die im Anspruch 7 genannten Merkmale gelöst.

Ein Gedanke der vorliegenden Erfindung ist darin zu sehen, dass als Ventil lediglich ein einfaches Ventil (z.B. Schaltventil, Proportionalventil, etc.) oder eine Kombination aus Ventilen verwendet wird, welches möglichst keine Drosselung oder Querschnittsverengung aufweist, so dass über das Ventil selbst möglichst keine Energie durch Leitungs- oder Drosselverluste verloren geht. Die vormalige Steuerungs- oder Regelungsaufgabe des Ventils wird nunmehr von einer elektrischen Maschine übernommen, die entweder unmittelbar oder mittelbar über ein Getriebe mit dem Hydraulikzylinder bzw. der Kolbenstange verbunden ist. Die elektrische Maschine kann als Motor oder als Generator wirken. Mit der elektrischen Maschine, die je nach Ansteuerung sowohl zum Antreiben (Motor) wie auch als Generator arbeiten kann, ist es möglich, den Hydraulikkolben sowohl in Bewegungsrichtung wie auch entgegen der Bewegungsrichtung mit Kraft zu beaufschlagen. In einem Fall addiert sich die vom Elektromotor erzeugte Kraft zu der Kraft des Hydraulikantriebs, im anderen Fall wird der Generators vom Hydraulikantrieb mit angetrieben, so dass von der ursprünglich vom Hydraulikantrieb zur Verfügung gestellten Kraft eine geringere resultierende Kraft übrig bleibt.

Anstatt die überschüssige Energie also wie bisher bei einem Proportionalventil an einer Drosselstelle in Wärme umzuwandeln, wird erfindungsgemäß die überschüssige hydraulische Energie in elektrische Energie regeneriert, wobei die elektrische Energie nachfolgend in anderen Achsen oder Komponenten oder über einen Zwischenkreis gespeichert und wieder verwendet werden kann. Das vorliegende Prinzip basiert also auf der Rückgewinnung der überschüssigen hydraulischen Energie, wobei die elektrische Maschine als Generator dient und die Funktion eines Proportionalventils ersetzt.

Natürlich kann die elektrische Maschine nicht nur zum Bremsen verwendet werden, sondern auch unterstützend für einen zusätzlichen Kraftaufbau - wie oben beschrieben - nützlich sein. Dies hat den Vorteil, dass der hydraulische Antrieb um die Leistungsfähigkeit der elektrischen Maschine geringer ausgelegt werden kann.

Bei einer speziellen Ausführungsform kann der Hydraulikzylinder in den Leerlauf schaltbar sein und der Antrieb lediglich über die als Elektromotor arbeitende elektrische Maschine selbst erfolgen.

Wird der hydraulische Zylinder mittels eines Akkumulators betrieben, so können mit einem solchen Antrieb hohe Dynamiken erzielt werden. Der mechanisch gekoppelte Generator kann die überschüssige Energie in Elektrizität umwandeln. Muss der Hydraulikzylinder in Position gehalten werden, so können die beiden Druckkammern entlastet oder kurz geschlossen werden. Während der Positionierung selbst kann insbesondere der Elektromotor verwendet werden, der unterstützend wirken kann.

Mit dem vorgeschlagenen Hybridantrieb kann man auch noch weitere Vorteile realisieren. Insbesondere ist eine Ausnutzung der an sich bekannten Vorteile des elektrischen Antriebs möglich. So kann eine direkte und optimale Geschwindigkeitsregelung durchgeführt werden, was die Regelgenauigkeit in besonderer Weise steigert. Wie vorgenannt bereits erwähnt, kann die überschüssige Energie wieder gewonnen werden, was gleichzeitig zu einer Reduktion der Erwärmung des Antriebs beiträgt. Das vorgeschlagene Antriebsystem ist überdies sehr kompakt. Aber auch die Vorteile der Hydraulik (beispielsweise großer Kraftaufbau, hohe Dynamik und längeres Kraft halten) bleiben erhalten.

Bei einer Spritzgießmaschine kann ein solcher Antrieb für die Einspritzachse, den Formschluss, Hilfssteuerungen oder allgemein Zylinder mit hohen dynamischen Anforderungen verwendet werden.

Dabei können als Antrieb für den hydraulischen Antrieb sowohl Akkumulatoren wie auch Pumpen (z.B. Regelpumpen) verwendet sein. Gegebenenfalls kann auch eine Kombination von Akkumulatoren und Pumpen vorgesehen werden.

Verschiedene konkrete Ausführungsformen der vorliegenden Erfindung werden nachfolgend mit Bezug auf die beigefügte Zeichnung erläutert. Die Zeichnungen zeigen in
- Fig. 1: ein schematisches Blockschaltbild eines erfindungsgemäßen Hybridantriebs, wobei die elektrische Maschine nur schematisch dargestellt ist,
- Fig. 2: eine schematische Darstellung eines Details aus Fig. 1 mit einer konkreten Ausführungsform der elektrischen Maschine,
- Fig. 3: eine weitere schematische Darstellung eines Details aus Fig. 1 mit einer weiteren Ausgestaltung der elektrischen Maschine,
- Fig. 4: eine weitere schematische Darstellung eines Details aus Fig. 1 mit einer weiteren Ausführungsform der elektrischen Maschine und
- Fig. 5: eine schematische Darstellung eines Druckübersetzers.

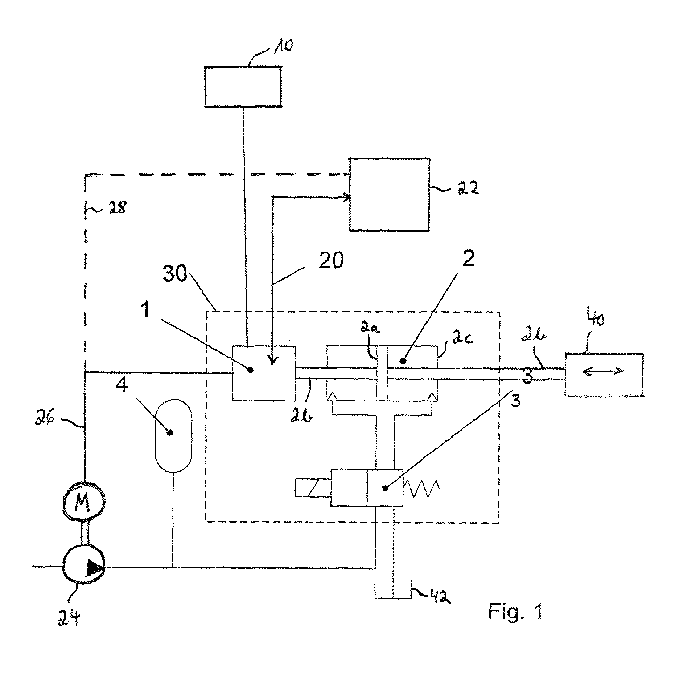

In Fig. 1 ist ein konkretes Ausführungsbeispiel gemäß der vorliegenden Erfindung dargestellt.

Dabei ist mit der Bezugsziffer 30 ein kompakter Hybridantrieb beschrieben, der einen hydraulischen Antrieb 2 mit einem doppelwirkenden Zylinderkolben 2a, eine mit dem Zylinderkolben 2a verbundene elektrische Maschine 1, sowie ein hydraulisches Ventil (hier Schaltventil) 3 zeigt, welches zur Versorgung der beiden Druckkammern des Zylinders 2c mit Hydraulikfluid ausgebildet ist. Die elektrische Maschine 1 ist mit einer Steuereinrichtung 10 verbunden, mit der der Betrieb der elektrischen Maschine 1 gesteuert werden kann und mit der die elektrische Maschine 1 wie unten näher beschrieben gesteuert wird. Des Weiteren ist eine Versorgungsleitung 20 vorgesehen, mit der regenerierte elektrische Energie einer weiteren Verwendung zugeführt werden kann. Beispielsweise kann ein Zwischenkreis 22 vorgesehen werden, in dem die regenerierte elektrische Energie gespeichert werden kann, bis sie wieder benötigt wird. Von dem Zwischenkreis 22 kann die elektrische Energie über die Versorgungsleitung 20 wieder der elektrischen Maschine 1 zugeführt werden. Es kann aber auch vorgesehen werden, mit der regenerierten elektrischen Energie eine Pumpe 24 zum Aufladen des Hydraulik-Akkumulators 4 anzutreiben, wie weiter unten noch erläutert wird.

Der hydraulische Antrieb 2 umfasst einen Zylinder 2c, in dem der doppelwirkende Zylinderkolben 2a hin und her beweglich aufgenommen ist. Die Kolbenstange 2b des Zylinderkolbens 2a ist auf beiden Seiten aus dem Zylinder 2c herausgeführt und steht an einer Seite in unmittelbarer Verbindung mit der elektrischen Maschine 1. Auf der anderen Seite ist die Kolbenstange 2b mit einem axial zu verfahrenden Betätigungselement 40 bzw. einer Last 40 wirkverbunden. Der hydraulische Antrieb 2 kann als Gleichlauf- oder als Differentialzylinder ausgeführt sein. Ferner kann auch ein einfach wirkender Zylinderkolben bzw. einfach wirkender Hydraulikzylinder vorgesehen werden, beispielsweise wenn der Elektromotor 1 zwischen dem hydraulischen Antrieb 2 und der Last 40 angeordnet wird.

Das hydraulische Ventil 3 besteht aus mindestens einem Zweiwegeventil mit mindestens zwei Ventilstellungen, in welchen Hydraulikfluid - wie dargestellt - in die beiden Kammern beidseits des doppelwirkenden Kolbens 2a gefördert werden kann. An seinem Eingang ist das Hydraulikventil 3 mit einem Akkumulator 4 und an seinem Ausgang mit einem Behälter bzw. Tank 40 für das Hydraulikfluid verbunden. Je nach Schaltstellung kann das hydraulische Ventil 3 Hydraulikfluid zumindest in die eine oder in die andere Druckkammer befördern und den doppelwirkenden Kolben 2a so mit einer bestimmten Kraft in die eine oder die andere Richtung beaufschlagen.

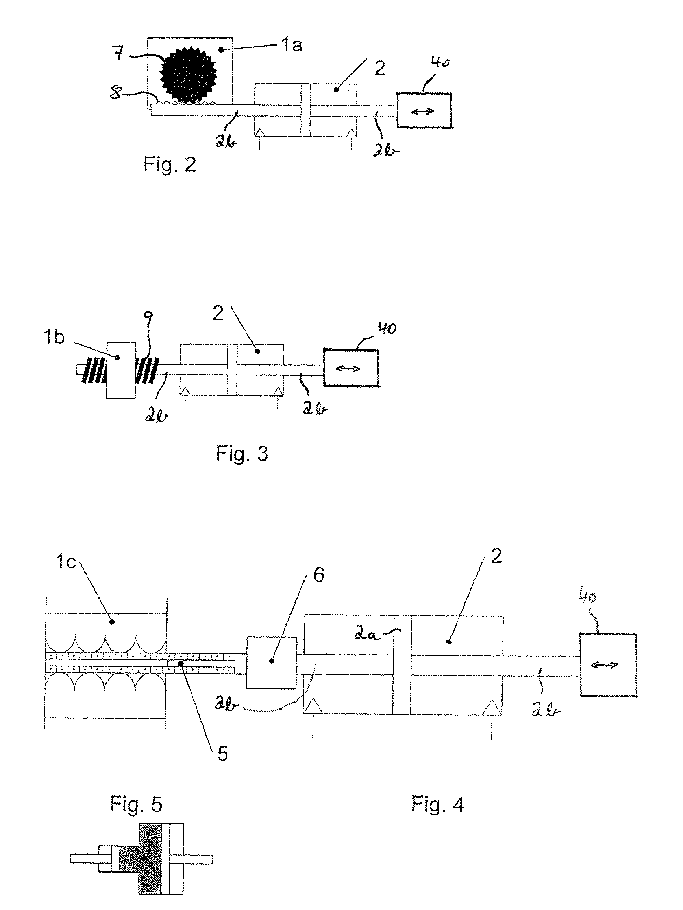

In den Fig. 2 - 4 sind überdies konkrete Ausgestaltungen der elektrischen Maschine 1 bzw. der mechanischen Verbindung der elektrischen Maschine 1 mit der Kolbenstange 2b des hydraulischen Antriebs 2 dargestellt.

So ist in Fig. 2 eine elektrische Maschine 1a gezeigt, welche als Motor und Generator verwendet werden kann und dessen Rotor unmittelbar oder über ein Getriebe mit einem Ritzel 7 gekoppelt ist, welches auf einem gezahnten Teil 8 der Kolbenstange 2b, die als Zahnstange wirkt, abrollt. Natürlich können auch beidseits der Kolbenstange 2b jeweils Ritzel 7 angeordnet sein, welche auf zugeordneten Zahnungen 8 abrollen bzw. in jeweilige Zahnungen 8 eingreifen und so eine symmetrische Krafteinbringung ermöglichen. An ihrem anderen Ende ist die Kolbenstange 2b mit einer Last 40 wirkverbunden.

In Fig. 3 ist eine elektrische Maschine 1 in Form eines Hohlwellenmotors 1 b angeordnet, dessen Rotor integral eine Mutter aufweist, die mit einer Spindel 9, welche auf dem entsprechenden Teil der Kolbenstange 2a angeordnet ist, in Wirkeingriff steht. Auf der anderen Seite ist die Kolbenstange 2b mit einer Last 40 wirkverbunden. Die Drehbewegung der Mutter wird über die Spindel 9 in eine axiale Bewegung der Last 40 umgesetzt.

In den Fig. 2 und 3 stellen die Ritzel-Zahnstangen-Kombination bzw. die Mutter-Spindel-Kombination Getriebe dar, welche die Drehbewegung des Elektromotors 1 bzw. der elektrischen Maschine 1 in eine Linearbewegung der Last 40 umwandeln.

In der Fig. 4 ist eine weitere Kombination dargestellt, bei der eine Übersetzung (beispielsweise Druckübersetzung) verwendet wird, wobei die elektrische Maschine direkt (ohne Übersetzung) mit dem hydraulischen Zylinder gekoppelt sein kann. Als elektrische Maschine 1 ist ein Linearmotor 1 c vorgesehen, in dessen Spulensystem der mit Stabmagneten 5 bestückte Teil der Kolbenstange 2b verschieblich angeordnet ist. Der mit dem Stabmagneten 5 bestückte Teil der Kolbenstange 2b ist über einen Druckübersetzer 6, wovon eine Ausführungsform in Fig. 5 im Detail dargestellt ist, mit dem doppelwirkenden Kolben 2a des hydraulischen Antriebs 2 verbunden. Auf der anderen Seite ist die Kolbentange 2b mit der Last 40 wirkverbunden.

Alle Ausführungsformen der Fig. 1 - 4 arbeiten nun in der gleichen Weise.

Soll das Betätigungselement 40 bzw. die Last 40 angetrieben werden, so wird das elektrische Ventil 3 entsprechend betätigt, so dass die zu beaufschlagende Druckkammer des doppelwirkenden Kolbens 2a mit Hydraulik versorgt wird. Da es faktisch zu kaum einer Drosselung im Ventil 3 selbst kommt, liegt der Akkumulatordruck 4 unter Berücksichtigung der Leitungsquerschnitte in der entsprechend verschalteten Druckkammer vor. Dies betrifft auch die entsprechenden Volumenströme des Hydraulikfluids, die durch die Leitungsquerschnitte bestimmt sind.

Soll nun das Betätigungselement 40 in geringerer Weise (z.B. weniger schnell oder mit weniger Kraft) angetrieben werden, so wird die elektrische Maschine 1 von der Steuereinrichtung 10 gesteuert als Generator betrieben und bremst gleichermaßen den hydraulischen Antrieb 2 ab, so dass als resultierende Kraft eine geringere Kraft als ohne Zuschaltung der elektrischen Maschine 1 zur Verfügung steht. Mit einer entsprechenden Steuerung bzw. Regelung der elektrischen Maschine 1 kann die Betätigungskraft in gewünschter Weise bestimmt und eingestellt werden.

Die von der elektrischen Maschine 1 im Generator-Betrieb erzeugte elektrische Energie kann über die Versorgungsleitung 20 in ein System (beispielsweise einen Zwischenkreis 22 als Energiespeicher) zurückgespeist werden. Alternativ kann mit der elektrischen Energie auch wieder eine Pumpe 24 betrieben werden, die den Akkumulator 4 auflädt. Dies ist in der Figur 1 mit der Verbindungslinie 26 zwischen der elektrischen Maschine 1 und einem Motor M der Pumpe 24 veranschaulicht. Auf diese Weise wird energiemäßig - bis auf Wirkungsgradverluste - die regenerierte Energie wieder im Akkumulator 4 selbst gespeichert. Selbstverständlich kann die Pumpe 24 auch an den Zwischenkreis 22 angeschlossen sein und von der dort zwischengespeicherten elektrischen Energie angetrieben werden. Diese Variante soll mit der gestrichelten Linie 28 angedeutet werden. Dadurch, dass die überschüssige Energie nicht im Ventil "verbrannt" wird, geht insgesamt weniger Energie verloren und die ansonsten verbrannte Energie steht dem System weiter zur Verfügung. Insgesamt ist die elektrische Maschine 1 sowie ihre Peripherie somit dazu ausgelegt, um elektrische Energie zu erzeugen und in ein System rückzuspeisen. Die elektrische Maschine 1 wird beim Abbremsen des hydraulischen Antriebs 2 angetrieben, die gewonnene Energie wird in elektrische Energie umgewandelt und in ein System rückgespeist.

Überdies kann mit der vorliegenden Ausführungsform der Akkumulator 4 und der Hydraulikantrieb 2 geringer ausgelegt werden, da der elektrische Antrieb 1 auch als elektrischer Motor betrieben werden und in Kombination mit dem hydraulischen Antrieb 2 dessen Antriebskraft erhöhen kann.

Dabei können die Vorteile sowohl des hydraulischen Antriebs (hohe Dynamik) wie auch des elektrischen Antriebs (hohe Regelgenauigkeit) genutzt werden. In besonderer Weise wesentlich ist jedoch, dass die ansonsten über das Proportionalventil "verbrannte Energie" nicht vollständig verloren geht.

Die Wirkverbindung zwischen der elektrischen Maschine 1, nachstehend auch Elektromotor genannt, dem hydraulischen Antrieb 2, nachstehend auch Hydraulikzylinder genannt, und der Last 40 kann auf vielfältige Weise realisiert werden. Insbesondere kann die Last 40 nicht nur wie in den Figuren 1 bis 4 dargestellt angeordnet sein. Vielmehr kann die Last 40 auch an anderen Positionen in dem Antriebsstrang vorgesehen werden:
- Hydraulikzylinder - Elektromotor - Last
- Last - Hydraulikzylinder - Elektromotor
- Hydraulikzylinder - Last - Elektromotor
- Elektromotor - Last - Hydraulikzylinder
- Last - Elektromotor - Hydraulikzylinder
   und so weiter.

### Bezugszeichenliste

- 1: Elektrische Maschine
- 1a: Elektrische Maschine mit Zahnstange-Ritzel-Kombination
- 1b: Elektrische Maschine mit Spindel-Mutter-Kombination
- 1c: Elektrische Maschine mit Linearantrieb
- 2: Hydraulischer Antrieb mit einem doppelwirkenden Hydraulikzylinder
- 2a: Kolben
- 2b: Kolbenstange
- 2c: Zylinder
- 3: Ventil
- 4: Hydraulik-Akkumulator
- 5: Stange mit Permanentmagnet
- 6: Druckübersetzer
- 7: Ritzel
- 8: Zahnung
- 9: Spindel
- 10: Steuereinrichtung
- 20: Versorgungsleitung (für Versorgung und Transport der zurück gewonnenen Energie)
- 22: Zwischenkreis
- 24: Pumpe
- 26: Verbindungsleitung zwischen Elektromotor 1 und Pumpe 24
- 28: Verbindungsleitung zwischen Zwischenkreis 22 und Pumpe 24
- 30: Hybridantrieb
- 40: Last bzw. anzutreibendes Element
- 42: Tank

## Patentansprüche

1. Verfahren zum Betrieb eines Hybridantriebs (30), wobei der Hybridantrieb (30) eine elektrische Maschine (1) und einen hydraulischen Antrieb (2) umfasst, wobei der hydraulische Antrieb (2) einen Hydraulikkolben (2a) und eine Kolbenstange (2b) aufweist, wobei die Kolbenstange (2b) mit der elektrischen Maschine (1) gekoppelt ist, wobei ein Ventil oder eine Ventilkombination (3) zur Ansteuerung des hydraulischen Antriebs (2) vorgesehen ist, und wobei eine Steuereinrichtung (10) zur Ansteuerung der elektrischen Maschine (1) vorgesehen ist,
mit den Schritten
- Ermitteln einer von dem Hybridantrieb (30) angeforderten Betätigungsrichtung und angeforderten Betätigungskraft,
- Schalten des Ventils oder der Ventilkombination (3) in eine Stellung, dass der hydraulische Antrieb (2) in die ermittelte Betätigungsrichtung wirksam ist,
- Ermitteln der Differenz der von dem hydraulischen Antrieb (2) erzeugten Kraft sowie der angeforderten Betätigungskraft und
- Betrieb der elektrischen Maschine (1) in einer Weise, dass durch Addition oder Subtraktion der von ihr erzeugten Kraft zu oder von der vom hydraulischen Antrieb (2) erzeugten Kraft die angeforderte Betätigungskraft erreicht wird, **dadurch gekennzeichnet, dass** die elektrische Maschine (1) beim Abbremsen des hydraulischen Antriebs (2) angetrieben wird, wobei die elektrische Maschine (1) im Generatorbetrieb betrieben und regenerierte elektrische Energie erzeugt wird, und wobei die regenerierte elektrische Energie eine weiteren Verwendung zugeführt wird.

2. Verfahren nach Anspruch 1,
**dadurch gekennzeichnet,**
**dass** die regenerierte elektrische Energie in einem Zwischenkreis (22) gespeichert und wieder verwendet wird.

3. Verfahren nach Anspruch 1 oder 2,
**dadurch gekennzeichnet,**
**dass** mit der regenerierten elektrischen Energie eine Pumpe (24) betrieben wird, die einen Hydraulik-Akkumulator (4) auflädt.

4. Verfahren nach einem der vorstehenden Ansprüche,
**dadurch gekennzeichnet,**
**dass** die elektrische Maschine (1) für einen zusätzlichen Kraftaufbau verwendet wird und den hydraulischen Antrieb (2) beim Kraftaufbau unterstützt.

5. Verfahren nach einem der vorstehenden Ansprüche,
wobei ein im wesentlichen drosselloses Ventil (3) oder eine im wesentlichen drossellose Ventilkombination verwendet wird.

6. Verfahren nach einem der vorstehenden Ansprüche,
wobei der Hybridantrieb (30) bei einer Spritzgießmaschine als Antrieb für ein Betätigungselement (40) verwendet wird, insbesondere als Antrieb für die Einspritzachse oder als Antrieb für den Formschluss.

7. Hybridantrieb (30) umfassend
- eine elektrische Maschine (1),
- einen hydraulischen Antrieb (2) mit einem Hydraulikkolben (2a) und einer Kolbenstange (2b), wobei die Kolbenstange (2b) mit der elektrischen Maschine (1) gekoppelt ist,
- ein Ventil oder eine Ventilkombination (3) zur Ansteuerung des hydraulischen Antriebs (2)
- und eine Steuereinrichtung (10) zur Ansteuerung der elektrischen Maschine (1), wobei die Steuereinrichtung (10) ausgebildet ist, um mit der elektrischen Maschine (1) eine zum hydraulischen Antrieb (2) gleichwirkende Kraft aufzubauen, wobei die elektrische Maschine (1) als Motor dient, oder um mit der elektrischen Maschine (1) eine zum hydraulischen Antrieb (2) entgegenwirkende Kraft aufzubauen, wobei die elektrische Maschine (1) als Generator dient, oder um die elektrische Maschine (1) kraftlos zu schalten, derart, dass die Kombination aus der Wirkung der elektrischen Maschine (1) und des hydraulischen Antriebs (2) einen vorgegebenen Wert einer Betätigungskraft erreicht, wobei mit der elektrischen Maschine (1) als Generator regenerierte elektrische Energie erzeugbar ist, wobei die regenerierte elektrische Energie eine weiteren Verwendung zuführbar ist.

8. Hybridantrieb nach Anspruch 1,
wobei des Ventil oder die Ventilkombination (3) im Wesentlichen drossellos ausgebildet ist.

9. Hybridantrieb nach Anspruch 7 oder 8,
wobei
der hydraulische Antrieb (2) als Gleichlaufzylinder oder als Differentialzylinder ausgeführt ist.

10. Hybridantrieb nach einem der Ansprüche 7 - 9,
wobei
ein Zwischenkreis (22) zur Speicherung der regenerierten elektrischen Energie vorgesehen ist.

11. Hybridantrieb nach einem der Ansprüche 7 - 10,
wobei
ein Hydraulik-Akkumulator (4) vorgesehen ist, der in Wirkverbindung mit dem hydraulischen Antrieb (2) steht, und dass eine Pumpe (24) zum Aufladen des Hydraulik-Akkumulators (4) vorgesehen ist, wobei die Pumpe (24) von der regenerierten elektrischen Energie antreibbar ist.

12. Hybridantrieb nach einem der Ansprüche 7 - 11,
wobei
der Hybridantrieb (30) mit einem Druckübersetzer (6) ausgestattet ist.

## Claims

1. A method for operating a hybrid drive (30), wherein the hybrid drive (30) comprises an electric machine (1) and a hydraulic drive (2), wherein the hydraulic drive (2) has a hydraulic piston (2a) and a piston rod (2b), wherein the piston rod (2b) is coupled with the electric machine (1), wherein a valve or a valve combination (3) is provided for actuating the hydraulic drive (2), and wherein a control unit (10) is provided for actuating the electric machine (1),
**with the steps**
- determining an actuating direction requested by the hybrid drive (30) and requested actuating force,
- switching the valve or the valve combination (3) into a position such that the hydraulic drive (2) is effective in the determined actuating direction,
- determining the difference of the force generated by the hydraulic drive (2) and the requested actuating force and
- operating the electric machine (1) such that by addition or subtraction of the force generated by it to or from the force generated by the hydraulic drive (2), the requested actuating force is achieved,
wherein the electric machine (1) is driven on braking of the hydraulic drive (2), wherein the electric machine (1) is operated in generator operation and regenerated electrical energy is produced, and wherein the regenerated electrical energy is supplied for a further use.

2. The method according to Claim 1,
**characterized in that**
the regenerated electrical energy is stored in an intermediate circuit (22) and is used again.

3. The method according to Claim 1 or 2,
**characterized in that**
a pump (24) is operated with the regenerated electrical energy, which pump charges a hydraulic accumulator (4).

4. The method according to one of the preceding claims,
**characterized in that**
the electric machine (1) is used for an additional build-up of force and supports the hydraulic drive (2) in the build-up of force.

5. The method according to one of the preceding claims, wherein a substantially throttle-less valve (3) or a substantially throttle-less valve combination is used.

6. The method according to one of the preceding claims, wherein the hybrid drive (30) in an injection moulding machine is used as drive for an actuating element (40), in particular as drive for the injection axis or as drive for the mould closure.

7. A hybrid drive (30) comprising
- an electric machine (1),
- a hydraulic drive (2) with a hydraulic piston (2a) and a piston rod (2b), wherein the piston rod (2b) is coupled with the electric machine (1),
- a valve or a valve combination (3) for actuating the hydraulic drive (2)
- and a control unit (10) for actuating the electric machine (1),
wherein the control unit (10) is constructed in order to build up with the electric machine (1) an equally acting force to the hydraulic drive (2), wherein the electric machine (1) serves as a motor, or in order to build up with the electric machine (1) a counter-active force to the hydraulic drive (2), wherein the electric machine (1) serves as a generator, or in order to switch the electric machine (1) to be powerless, such that the combination of the action of the electric machine (1) and of the hydraulic drive (2) reaches a predetermined value of an actuating force, wherein electrical energy regenerated by the electric machine (1) as generator is able to be produced, wherein the regenerated electrical energy is able to be supplied for a further use.

8. The hybrid drive according to Claim 1,
**characterized in that**
the valve or the valve combination (3) is constructed so as to be substantially throttle-less.

9. The hybrid drive according to Claim 7 or 8,
**characterized in that**
the hydraulic drive (2) is embodied as a synchronous cylinder or as a differential cylinder.

10. The hybrid drive according to one of Claims 7 - 9,
**characterized in that**
an intermediate circuit (22) is provided for storing the regenerated electrical energy.

11. The hybrid drive according to one of Claims 7 - 10,
**characterized in that**
a hydraulic accumulator (4) is provided, which is in operative connection with the hydraulic drive (2), and that a pump (24) is provided for charging the hydraulic accumulator (4), wherein the pump (24) is able to be driven by the regenerated electrical energy.

12. The hybrid drive according to one of Claims 7 - 11,
**characterized in that**
the hybrid drive (30) is equipped with a pressure intensifier (6).

## Revendications

1. Procédé de fonctionnement d'un entraînement hybride (30), dans lequel l'entraînement hybride (30) comprend un moteur électrique (1) et un entraînement hydraulique (2), dans lequel l'entraînement hydraulique (2) présente un piston hydraulique (2a) et une tige de piston (2b), dans lequel la tige de piston (2b) est couplée au moteur électrique (1), dans lequel une soupape ou une combinaison de soupapes (3) est prévue afin de piloter l'entraînement hydraulique (2), et dans lequel un dispositif de commande (10) est prévu afin de piloter le moteur électrique (1),
comportant les étapes de
- détermination d'une direction d'actionnement et d'une force d'actionnement requises par l'entraînement hydraulique (30),
- commutation de la soupape ou de la combinaison de soupapes (3) dans une position, de sorte que l'entraînement hydraulique (2) soit efficace dans la direction d'actionnement déterminée,
- détermination de la différence de la force générée par l'entraînement hydraulique (2) ainsi que de la force d'actionnement requise et
- fonctionnement du moteur électrique (1) d'une manière telle que la force d'actionnement requise soit obtenue en additionnant ou soustrayant la force générée par ce dernier ou la force générée par l'entraînement hydraulique (2), **caractérisé en ce que** le moteur électrique (1) est entraîné lors du freinage de l'entraînement hydraulique (2), dans lequel le moteur électrique (1) est exploité en fonctionnement de générateur et de l'énergie électrique régénérée est produite, et dans lequel l'énergie électrique régénérée est réalimentée en vue d'une utilisation ultérieure.

2. Procédé selon la revendication 1,
**caractérisé en ce**
**que** l'énergie électrique régénérée est accumulée dans un circuit intermédiaire (22) et réutilisée.

3. Procédé selon les revendications 1 ou 2,
**caractérisé en ce**
**qu'**une pompe (24) est mise en fonctionnement avec l'énergie électrique régénérée, laquelle charge un accumulateur hydraulique (4).

4. Procédé selon une des revendications précédentes,
**caractérisé en ce**
**que** le moteur électrique (1) est employé pour une augmentation de puissance supplémentaire et assiste l'entraînement hydraulique (2) lors de l'augmentation de puissance.

5. Procédé selon une des revendications précédentes,
dans lequel une soupape (3) essentiellement sans étranglement ou une combinaison de soupapes essentiellement sans étranglement est employée.

6. Procédé selon une des revendications précédentes, dans lequel l'entraînement hybride (30) est employé sur une machine de moulage par injection comme entraînement pour un élément d'actionnement (40), notamment comme entraînement pour l'axe d'injection ou comme entraînement pour la conjonction de forme.

7. Entraînement hybride (30) comprenant :
- un moteur électrique (1),
- un entraînement hydraulique (2) comportant un piston hydraulique (2a) et une tige de piston (2b), dans lequel la tige de piston (2b) est couplé au moteur électrique (1),
- une soupape ou une combinaison de soupapes (3) pour piloter l'entraînement hydraulique (2),
- et un dispositif de commande (10) pour piloter le moteur électrique (1), dans lequel le dispositif de commande (10) est conçu afin d'augmenter la puissance équivalente à l'entraînement hydraulique (2) avec le moteur électrique (1), dans lequel le moteur électrique (1) sert de moteur, ou afin d'augmenter la puissance contraire à l'entraînement hydraulique (2) avec le moteur électrique (1), dans lequel le moteur électrique (1) sert de générateur, ou afin de commuter le moteur électrique (1) sans puissance, de telle sorte que la combinaison de l'action du moteur électrique (1) et de l'entraînement hydraulique (2) atteigne une valeur prescrite d'une force d'actionnement, dans lequel de l'énergie électrique régénérée peut être produite avec le moteur électrique (1) faisant office de générateur, dans lequel l'énergie électrique régénérée peut être réalimentée en vue d'une utilisation ultérieure.

8. Entraînement hybride selon la revendication 1,
dans lequel la soupape ou la combinaison de soupapes (3) ont une combinaison essentiellement sans étranglement.

9. Entraînement hybride selon les revendications 7 ou 8,
dans lequel l'entraînement hydraulique (2) est conçu comme un cylindre à vitesse constante ou comme un cylindre différentiel.

10. Entraînement hybride selon une des revendications 7-9,
dans lequel un circuit intermédiaire (22) est prévu afin de stocker l'énergie électrique régénérée.

11. Entraînement hybride selon une des revendications 7-10,
dans lequel un accumulateur hydraulique (4) est prévu, qui est en liaison opérationnelle avec l'entraînement hydraulique (2), et une pompe (24) pour charger l'accumulateur hydraulique (4) est prévue, dans lequel la pompe (24) peut être entraînée par l'énergie électrique régénérée.

12. Entraînement hybride selon une des revendications 711,
dans lequel l'entraînement hybride(30) est équipé d'un multiplicateur de pression (6).
